# EUROPEAN PATENT APPLICATION

(11) **EP 4 645 483 A1**
(43) Date of publication of application: **05.11.2025**
(21) Application number: 23911228.7
(22) Date of filing: 25.07.2023
(51) Int. Cl.: H01M 10/04, H01M 10/0587, H01M 50/474, H01M 50/477, H01M 50/586, H01M 50/593

(54) **RECTANGULAR SECONDARY BATTERY**

(30) Priority: 26.12.2022 JP 2022207811
(71) Applicant: Vehicle Energy Japan Inc., Ibaraki 312-8505 (JP)
(72) Inventor: HOSOYA Kiyoharu, Hitachinaka-shi, Ibaraki 312-8505 (JP); MORISHITA Takuma, Hitachinaka-shi, Ibaraki 312-8505 (JP); TANAKA Nobuyoshi, Hitachinaka-shi, Ibaraki 312-8505 (JP); MASUDA Hiroaki, Hitachinaka-shi, Ibaraki 312-8505 (JP)
(74) Representative: Mewburn Ellis LLP
(86) International application number: PCT/JP2023/027252
(87) International publication number: WO 2024/142444

(57) **Abstract**

There is provided a rectangular secondary battery in which the dielectric strength is improved and an insulating protective film and a wound electrode body can be fixed in consideration of productivity.

A rectangular secondary battery including a wound electrode body 3 and an insulating protective film 2 that is wound around the wound electrode body 3 or folded along the outer shape of the wound electrode body to cover the wound electrode body, wherein the insulating protective film 2 has at least side circumferential surface parts 51b and 51C that extend in a circumferential direction of side circumferential surfaces of the wound electrode body 3 and cover the wound electrode body 3 and a bottom surface part 52a that covers a bottom surface of the wound electrode body, on the side circumferential surface of the wound electrode body, an end surface overlapping part 51h in which end surface parts on both sides of the insulating protective film 2 overlap each other is formed, and the end surface overlapping part 51h has penetration regions 51f-1 and 51G-1 that reach the side circumferential surface of the wound electrode body, and the periphery of the penetration regions 51f-1 and 51G-1 of the end surface overlapping part and the side circumferential surface of the wound electrode body are bonded and fixed through the penetration regions 51f-1 and 51G-1 with an electrically insulating adhesive tape 20a.

## Description

### Technical Field

The present invention relates to a rectangular secondary battery used in, for example, electric vehicles and hybrid vehicles.

### Background Art

In recent years, high-energy-density rectangular lithium ion secondary batteries have been developed as power sources for electric vehicles and hybrid vehicles. In-vehicle secondary batteries require a larger capacity than those for mobile phones, and thus a plurality of secondary batteries may be mounted. In a rectangular battery, a flat wound electrode body, which is a power generation element, is housed in a rectangular battery container (battery can). The wound electrode body is formed by overlapping a positive electrode plate and a negative electrode plate with a separator interposed therebetween and winding them in an insulated state.

A positive electrode current collector lamination part is provided on one side of the wound electrode body in the winding axis direction, a negative electrode current collector lamination part is provided on the other side in the winding axis direction, a positive electrode connection terminal is bonded to the positive electrode current collector lamination part, and a negative electrode connection terminal is bonded to the negative electrode current collector lamination part.

For example, the positive electrode connection terminal and the negative electrode connection terminal are electrically connected to a positive electrode external terminal and a negative electrode external terminal disposed on the same surface of the battery container such as a battery lid, outside the battery container, and the battery container has an electrically neutral structure, that is, the battery container has a structure insulated from the wound electrode body.

In this type of rectangular battery, various proposals have been made to interpose an insulating protective sheet or film between the wound electrode body and the inner wall of the battery container for protection in order to prevent a positive electrode current collector lamination part and a negative electrode current collector lamination part of the wound electrode body positioned inside a battery, and a positive electrode connection terminal and a negative electrode connection terminal connected thereto from being short-circuited through the inner wall of the battery container, and to prevent the surface of the wound electrode body from being scratched when the wound electrode body is inserted into the battery container (hereinafter referred to as an insulating film).

For example, Japanese Patent Application Publication No. 2015-11895 (Patent Literature 1) discloses a secondary battery in which an insulating protective film covering the side circumferential surface of a flat wound electrode body having a substantially rectangular parallelepiped shape is provided. The insulating protective film is wound so that it covers the side circumferential surface of the wound electrode body, and end surfaces on both sides of the wound insulating protective film are disposed so that they face each other with a predetermined distance gap therebetween. In addition, an exposed area is formed in this portion, and in this state, end surfaces on both sides and the exposed areas of the wound electrode body are fixed to each other by adhering them with an adhesive tape.

In this manner, when end surfaces on both sides of the insulating protective film are disposed so that they face each other with a predetermined distance gap therebetween, overlapping of the insulating protective film is avoided and the thickness is reduced.

### Citation List

### Patent Literature

Patent Literature 1: Japanese Patent Application Publication No. 2015-11895

### Summary of Invention

### Technical Problem

However, in Patent Literature 1, in the structure, there are exposed areas (where the separator is exposed) of the wound electrode body on end surfaces on both sides of the insulating protective film, and the wound electrode body is not completely covered with the insulating protective film. Therefore, there is room for improvement in order to improve insulation and fix the insulating film and the wound electrode body with favorable productivity.

An object of the present invention is to provide a rectangular secondary battery in which the dielectric strength is improved and an insulating protective film and a wound electrode body can be fixed in consideration of productivity.

### Solution to Problem

An aspect of the present invention provides a rectangular secondary battery including a wound electrode body and an insulating protective film that is wound around the wound electrode body or folded along the outer shape of the wound electrode body to cover the wound electrode body, wherein the insulating protective film has at least a side circumferential surface part that extends in a circumferential direction of a side circumferential surface of the wound electrode body and covers the wound electrode body and a bottom surface part that covers a bottom surface of the wound electrode body, on the side circumferential surface of the wound electrode body, an end surface overlapping part in which end surface parts on both sides of the insulating protective film overlap each other is formed, and the end surface overlapping part has a penetration region that reaches the side circumferential surface of the wound electrode body and the periphery of the penetration region of the end surface overlapping part and the side circumferential surface of the wound electrode body are bonded and fixed through the penetration region with an electrically insulating adhesive tape. Advantageous Effects of Invention

According to the present invention, it is possible to provide a rectangular secondary battery in which the dielectric strength is improved and an insulating protective film and a wound electrode body can be fixed in consideration of productivity.

### Brief Description of Drawings

[Fig. 1]

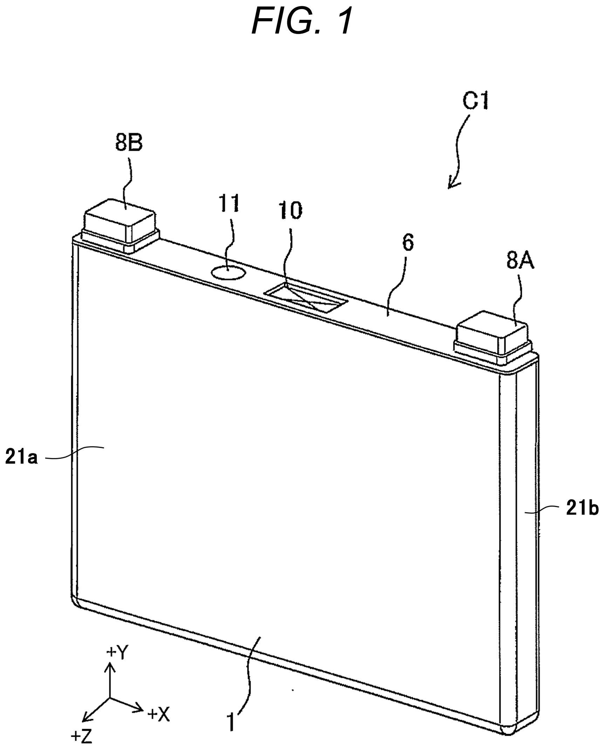

   Fig. 1 is an appearance perspective view showing an appearance of a rectangular secondary battery.
[Fig. 2]

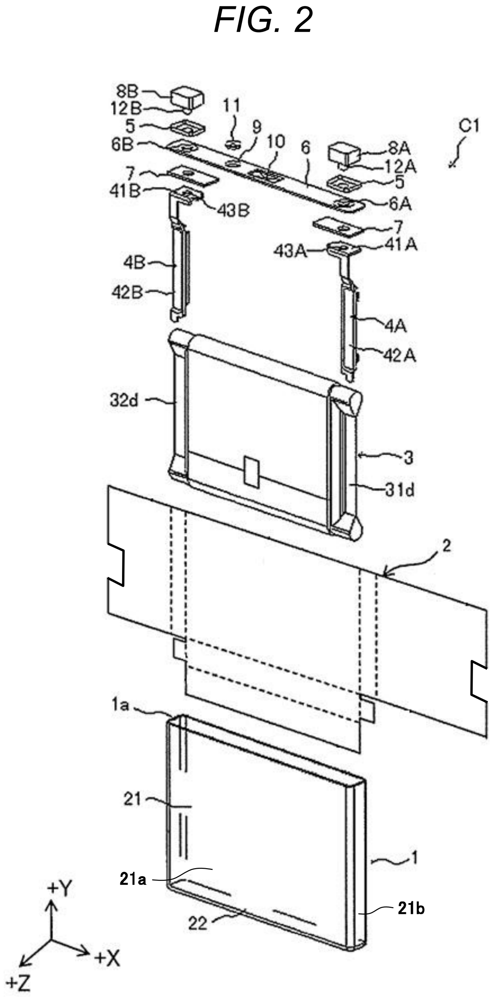

   Fig. 2 is an exploded perspective view showing components of an exploded rectangular secondary battery.
[Fig. 3]

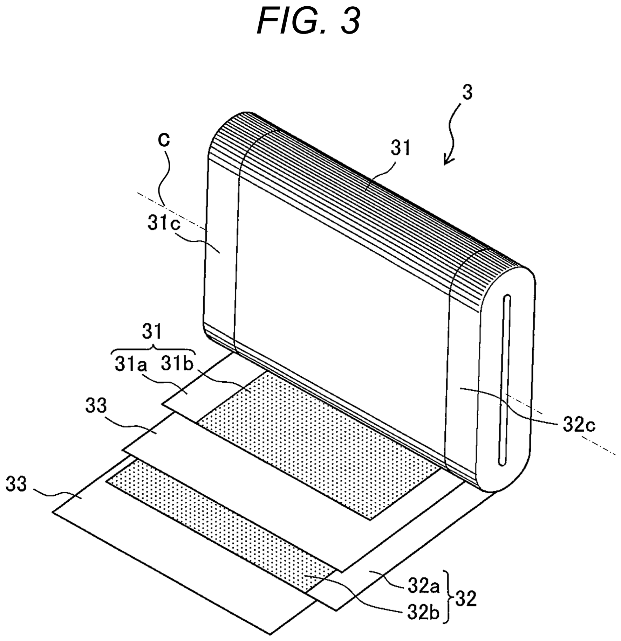

   Fig. 3 is an exploded perspective view showing components of an exploded wound electrode body.
[Fig. 4]

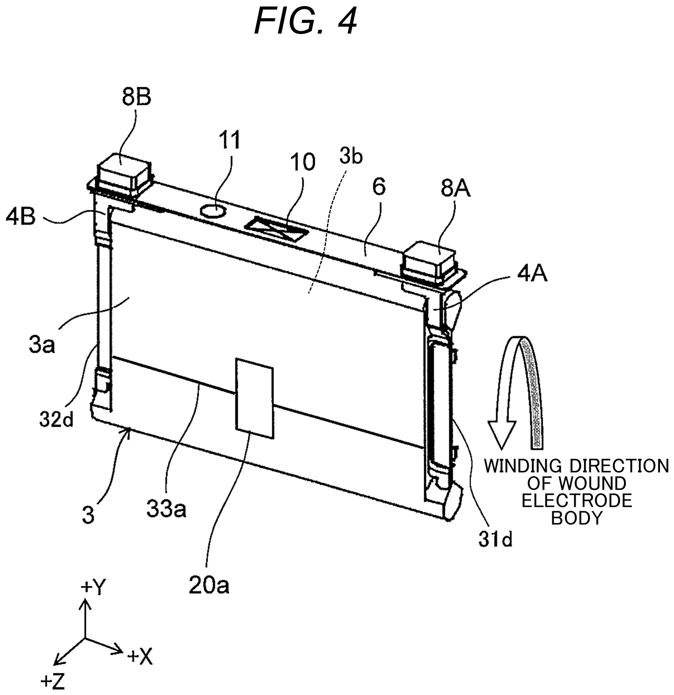

   Fig. 4 is a perspective view of a power generation element assembly having a wound electrode body as a main element.
[Fig. 5]

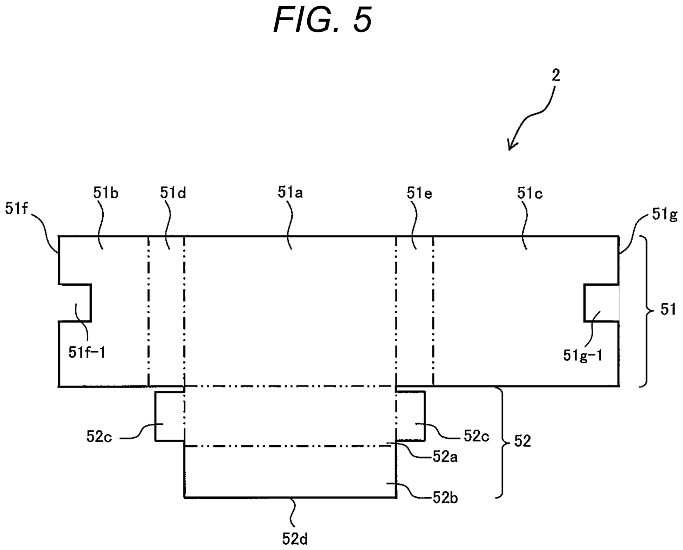

   Fig. 5 is an unfolded view in which an insulating protective film covering a wound electrode body is unfolded.
[Fig. 6]

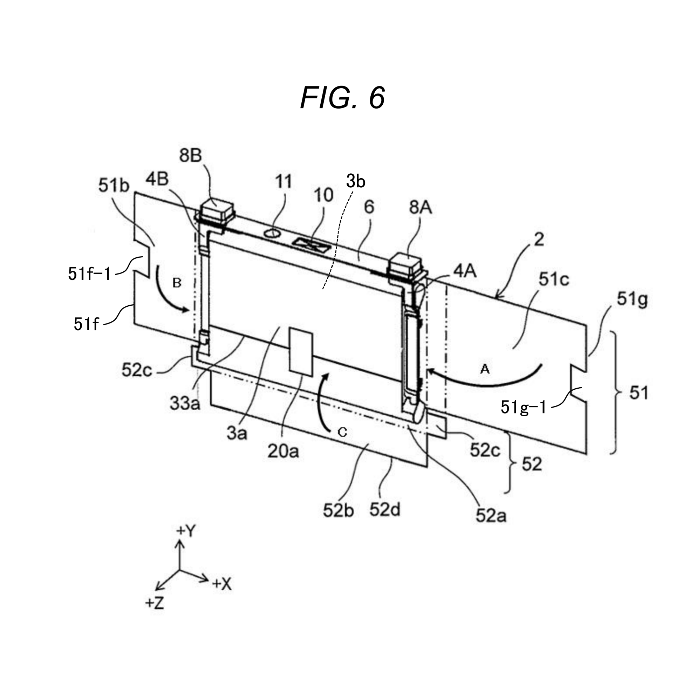

   Fig. 6 is a perspective view showing the positional relationship between an insulating protective film and a power generation element assembly, and a method of folding an insulating protective film.
[Fig. 7]

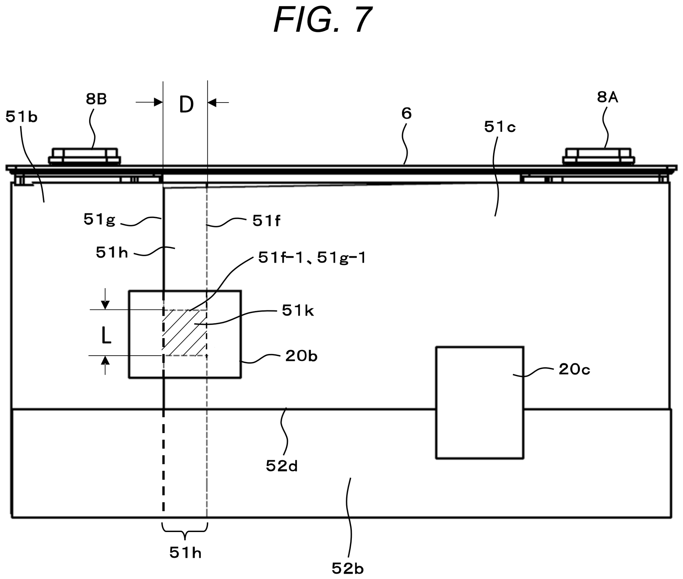

   Fig. 7 is a front view showing a state in which a side cover part of the insulating protective film is wound around the power generation element assembly.
[Fig. 8]

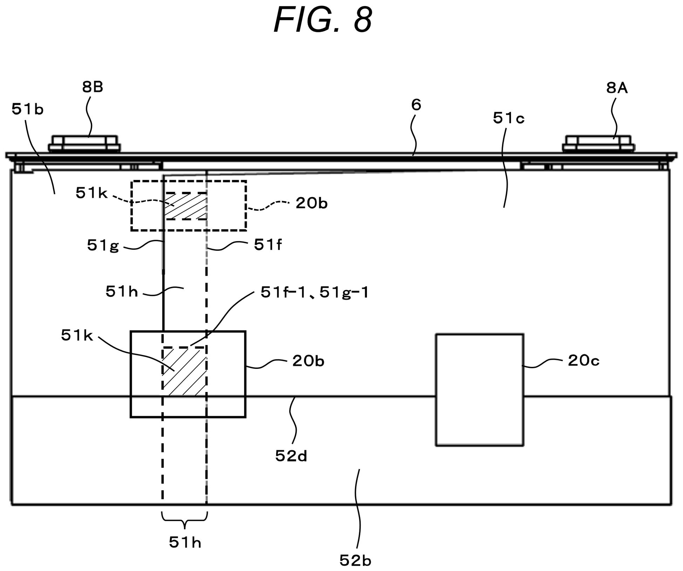

   Fig. 8 is a front view showing a modified example of a state in which a side cover part of the insulating protective film is wound around the power generation element assembly.
[Fig. 9A]

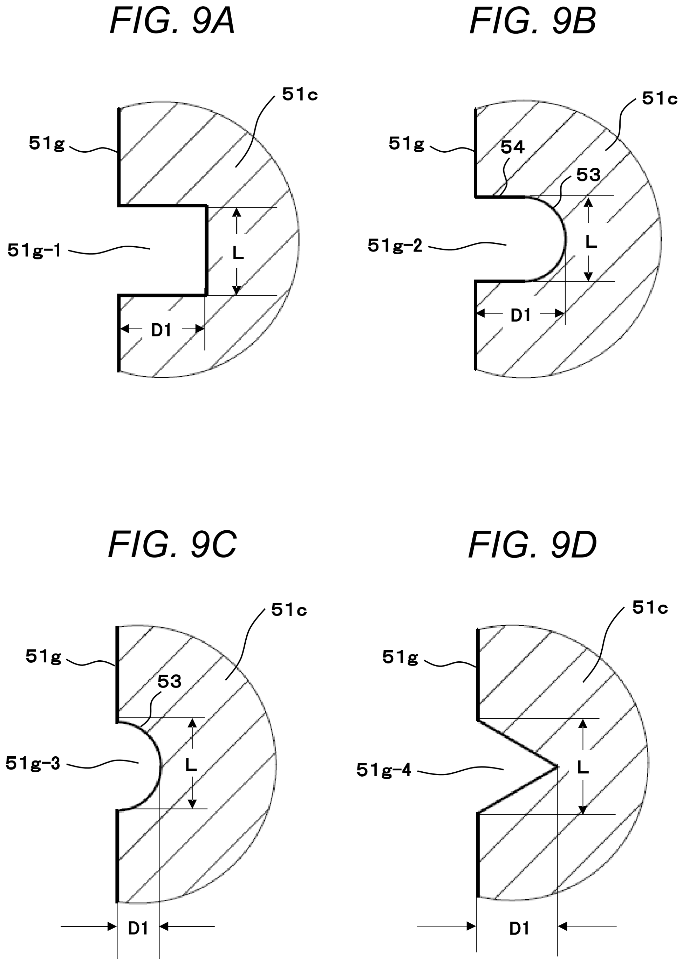

   Fig. 9A is a configuration diagram showing a first example of a notch part formed on an end surface of an insulating protective film.
[Fig. 9B]
   Fig. 9B is a configuration diagram showing a second example of a notch part formed on an end surface of an insulating protective film.
[Fig. 9C]
   Fig. 9C is a configuration diagram showing a third example of a notch part formed on an end surface of an insulating protective film.
[Fig. 9D]
   Fig. 9D is a configuration diagram showing a fourth example of a notch part formed on an end surface of an insulating protective film.
[Fig. 9E]

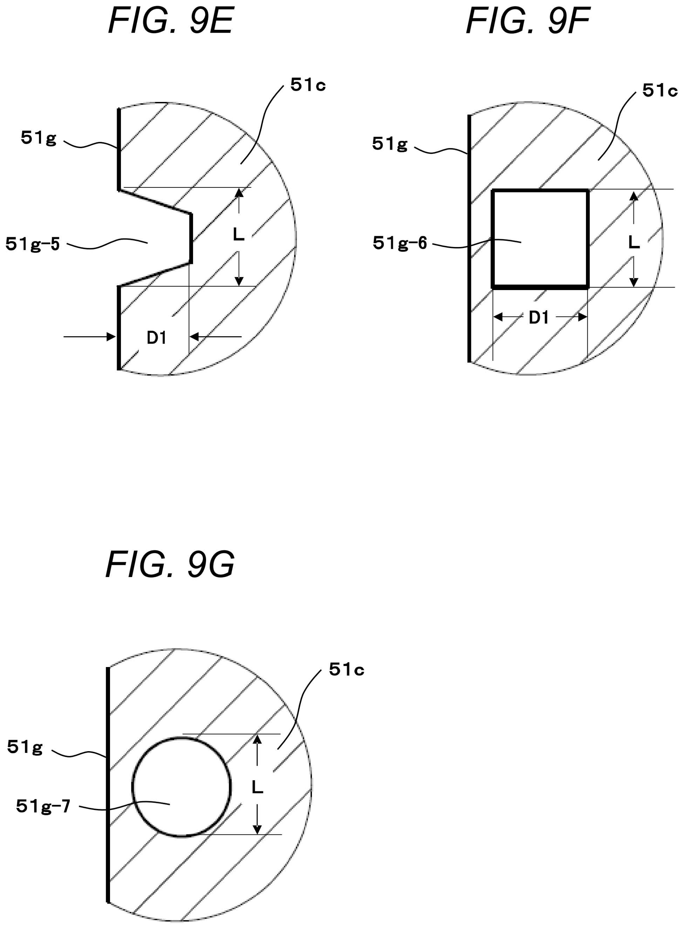

   Fig. 9E is a configuration diagram showing a fifth example of a notch part formed on an end surface of an insulating protective film.
[Fig. 9F]
   Fig. 9F is a configuration diagram showing a sixth example of a notch part formed on an end surface of an insulating protective film.
[Fig. 9G]
   Fig. 9G is a configuration diagram showing a seventh example of a notch part formed on an end surface of an insulating protective film.

### Description of Embodiments

An embodiment of the present invention will be described below in detail with reference to the drawings, but the present invention is not limited to the following embodiment, and various modified examples and application examples within the technical concept of the present invention are also included in the scope of the present invention.

Incidentally, the disposition configuration of the insulating protective film described in Patent Literature 1 is indeed a favorable method of avoiding overlapping of an insulating protective film and reducing the length in the thickness direction. However, in the future, there is expected to be a demand to increase the energy density of single cells and battery packs. That is, when the number of single cells mounted in the battery pack increases, the total voltage of the battery packs increases. In this case, the problem is the dielectric strength between the battery container and the wound electrode body.

In addition, in order to improve the insulating performance, a method of overlapping end surfaces on both sides of an insulating protective film and eliminating an exposed area is provided. However, in this case, the insulating protective film and the wound electrode body should be fixed to restrict misalignment between them, and the development of a new fixing method in consideration of productivity is necessary. For example, if misalignment occurs between the insulating protective film and the wound electrode body, when a power generation element assembly is inserted into a battery can, the insulating protective film is caught between the battery can and the lid, which is thought to cause poor welding during laser welding.

The present invention can sufficiently address such a problem, and an embodiment of the present invention will be described below with reference to the drawings. In the embodiment to be described below, a lithium ion secondary battery used in hybrid vehicles and electric vehicles will be described as an example of a rectangular secondary battery.

Fig. 1 is an appearance perspective view of a rectangular secondary battery according to the present embodiment, and Fig. 2 is an exploded perspective view of the rectangular secondary battery according to the present embodiment.

As shown in Fig. 1 and Fig. 2, a rectangular secondary battery C1 includes a battery can 1 and a lid (battery lid) 6. A wound electrode body 3 is housed in the battery can 1, and an opening 1a of the battery can 1 is sealed with the lid 6. The lid 6 is bonded to the battery can 1 by laser welding, and the battery can 1 and the lid 6 form a sealed battery container. A positive electrode external terminal 8A and a negative electrode external terminal 8B are provided on the lid 6.

In the rectangular secondary battery C1, the wound electrode body 3 is charged via the positive electrode external terminal 8A and the negative electrode external terminal 8B, and the rectangular secondary battery C1 supplies power to an external load. A gas exhaust valve 10 is integrally provided in the lid 6, and when the pressure in the battery container increases, the gas exhaust valve 10 is open, a gas is discharged from the inside, the pressure in the battery container decreases, and the safety of the rectangular secondary battery C1 is secured.

The battery can 1 of the rectangular secondary battery C1 is of a so-called rectangular type, including a rectangular can bottom 22, a rectangular cylindrical side wall part (sometimes referred to as a side circumferential surface) 21 rising from four sides of the can bottom 22 in the cell height direction (+Y direction), and an opening 1a that is provided at the upper end of the side wall part 21 and is open in the cell height direction. The side wall part 21 of the battery can 1 has a pair of wide side wall parts 21a that are separated from each other in the cell thickness direction (+Z direction) and face each other and a pair of narrow side wall parts 21b that are separated from each other in the cell width direction (+X direction) and face each other.

The wound electrode body 3 that is wrapped and covered with an insulating protective film 2 is housed in the battery can 1 (the insulating protective film 2 will be described below). The wound electrode body 3 has a substantially rectangular parallelepiped flat shape, and has a pair of flat surfaces and a pair of curved surfaces having an arc-shaped cross section that face each other with the pair of flat surfaces therebetween. The wound electrode body 3 is inserted into the battery can 1 from one curved surface side, and is housed in the battery can 1 in a transverse manner in which the winding axis direction is the cell width direction (+X direction).

A positive electrode foil connecting part 31d and a negative electrode foil connecting part 32d, which are electrode foil exposed parts of the wound electrode body 3, are at least partially bundled in the flat thickness direction to form a flat plate, and are bonded to a positive electrode side connecting end 42A of a positive electrode current collector plate (current collector terminal) 4A and a negative electrode side connecting end 42B of a negative electrode current collector plate (current collector terminal) 4B by ultrasonic welding, respectively.

The base ends of the positive electrode current collector plate 4A and the negative electrode current collector plate 4B are connected to the positive electrode external terminal 8A and the negative electrode external terminal 8B, respectively. A gasket 5 and a dielectric plate 7 are provided in the lid 6, and the positive electrode current collector plate 4A and the negative electrode current collector plate 4B, and the positive electrode external terminal 8A and the negative electrode external terminal 8B are each electrically insulated from the lid 6.

As the material of the battery can 1 and the lid 6, a metallic material such as aluminum or an aluminum alloy is used. As the material of the positive electrode current collector plate 4A and the positive electrode external terminal 8A, aluminum or an aluminum alloy is used. As the material of the negative electrode current collector plate 4B and the negative electrode external terminal 8B, copper or a copper alloy is used.

The positive electrode external terminal 8A and the negative electrode external terminal 8B have welded junctions that are weld-bonded to a busbar (not shown) or the like. The welded junction has a rectangular parallelepiped block shape that protrudes upward from the lid 6, and is disposed so that its lower surface faces the surface of the lid 6 and its upper surface is parallel to the lid 6 at a predetermined height position.

A positive electrode connecting part 12A and a negative electrode connecting part 12B protrude from the lower surfaces of the positive electrode external terminal 8A and the negative electrode external terminal 8B, respectively, and have columnar shapes with tips that can be inserted into a positive electrode side through-hole 6A and a negative electrode side through-hole 6B of the lid 6. The positive electrode connecting part 12A and the negative electrode connecting part 12B penetrate the lid 6, protrude further toward the inside of the battery can 1 than a positive electrode current collector plate base 41A and a negative electrode current collector plate base 41B of the positive electrode current collector plate 4A and the negative electrode current collector plate 4B, the tips are caulked, and the positive electrode external terminal 8A and the negative electrode external terminal 8B, and the positive electrode current collector plate 4A and the negative electrode current collector plate 4B are integrally fixed to the lid 6.

The gasket 5 is interposed between the positive electrode external terminal 8A and the lid 6 and between the negative electrode external terminal 8B and the lid 6, and the dielectric plate 7 is interposed between the positive electrode current collector plate 4A and the lid 6 and between the negative electrode current collector plate 4B and the lid 6.

The positive electrode current collector plate 4A and the negative electrode current collector plate 4B have the rectangular plate-like positive electrode current collector plate base 41A and negative electrode current collector plate base 41B that are disposed to face the lower surface of the lid 6, and the positive electrode side connecting end 42A and the negative electrode side connecting end 42B which are bent at the side ends of the positive electrode current collector plate base 41A and the negative electrode current collector plate base 41B, extend toward the can bottom 22 along the wide side surface of the battery can 1, and are connected when they overlap facing the positive electrode foil connecting part 31d and the negative electrode foil connecting part 32d of the wound electrode body 3.

At the positive electrode current collector plate base 41A and the negative electrode current collector plate base 41B, a positive electrode side opening hole 43A and a negative electrode side opening hole 43B into which the positive electrode connecting part 12A and the negative electrode connecting part 12B are inserted are formed.

The positive electrode external terminal 8A and the positive electrode current collector plate 4A form a positive electrode side terminal structure part, and the negative electrode external terminal 8B and the negative electrode current collector plate 4B form a negative electrode side terminal structure part. Then, the positive electrode side terminal structure part and the negative electrode side terminal structure part are integrally attached to the lid 6 via the gasket 5 and the dielectric plate 7 to form a lid assembly. Then, the wound electrode body 3 is attached to the lid assembly to assemble the power generation element assembly (refer to Fig. 4).

The wound electrode body 3 is supported between the positive electrode current collector plate 4A and the negative electrode current collector plate 4B of the lid assembly, the winding axis direction extends parallel to the lid 6, the flat surface extends in a direction perpendicular to the lower surface of the lid 6, and a pair of curved surfaces of the wound electrode body 3 are disposed separately on the side of the lid 6 and on the side of the can bottom 22 of the battery can 1.

The insulating protective film 2 covers the wound electrode body 3 attached to the lid assembly together with the positive electrode current collector plate 4A and the negative electrode current collector plate 4B from the outside, and is interposed between the wound electrode body 3 and the side wall part 21 and between the wound electrode body 3 and the can bottom 22 in the battery can 1.

The insulating protective film 2 is made of an insulating synthetic resin material, and insulates between the battery can 1 and the wound electrode body 3, the positive electrode current collector plate 4A, and the negative electrode current collector plate 4B. In addition, the insulating protective film 2 protects the wound electrode body 3, the positive electrode current collector plate 4A, and the negative electrode current collector plate 4B so that the wound electrode body 3, the positive electrode current collector plate 4A, and the negative electrode current collector plate 4B do not come into direct contact with the battery can 1 when an external impact or vibration is applied to the rectangular secondary battery C1. The configuration and operations and effects of the insulating protective film 2 will be described below in detail.

The battery can 1 has a size and shape with which, when the wound electrode body 3 is inserted into the battery can 1 through the opening 1a while the periphery of the wound electrode body 3 is covered with the insulating protective film 2, the pair of flat surfaces of the wound electrode body 3 and the wide side wall part 21a of the side wall part 21 of the battery can 1 are in contact with each other with the insulating protective film 2 interposed therebetween, and the wound electrode body 3 can be inserted by applying a slight pressing force. In addition, a slight gap is formed between end surfaces on both sides of the wound electrode body 3 in the winding axis direction and the narrow side wall part 21b of the side wall part 21 of the battery can 1.

The opening 1a of the battery can 1 is closed with the lid 6, and the lid 6 is laser-welded to the battery can 1 to seal it. Here, the inside of the battery can 1 is then filled with an electrolytic solution. The electrolytic solution is injected into the battery can 1 through a liquid injection port 9 in the lid 6. After the electrolytic solution is injected, the liquid injection port 9 is closed with a liquid injection plug 11, and the liquid injection plug 11 is laser-welded to the lid 6 to seal it.

Fig. 3 is an exploded perspective view showing a state in which the wound electrode body 3 is partially unfolded.

The wound electrode body 3 is an electrode body in which a positive electrode body 31 and a negative electrode body 32 overlap and are wound into a flat shape with a separator 33 therebetween, and on end surfaces on both sides of the wound electrode body 3 in the axial line C (winding axis) direction, a positive electrode foil exposed part 31c and a negative electrode foil exposed part 32c to which a positive electrode mixture layer 31b and a negative electrode mixture layer 32b are not applied are provided. In the wound electrode body 3, the outmost electrode body is the negative electrode body 32, and the separator 33 is additionally wound further outside the negative electrode body 32.

The separator 33 is held in a wound state by having a winding end 33a (refer to Fig. 4) disposed on one flat surface of the wound electrode body 3 and fixing the winding end 33a with an adhesive tape 20a (refer to Fig. 4), which is a separator fixing tape. In the wound electrode body 3, the two separators 33 are used, and their winding ends 33a are disposed to overlap each other at the same position.

As shown in Fig. 4, the winding end 33a of the separator 33 extends from one curved surface side to the other curved surface side on one flat surface of the wound electrode body 3, and is disposed at a position biased toward the other curved surface side relative to the center position of the wound electrode body 3.

The separator 33 has a function of insulating between the positive electrode body 31 and the negative electrode body 32. The negative electrode mixture layer 32b of the negative electrode body 32 is formed larger in the width direction than the positive electrode mixture layer 31b of the positive electrode body 31. Thus, the positive electrode body 31 and the negative electrode body 32 overlap so that the entire surface of the positive electrode mixture layer 31b always faces the negative electrode mixture layer 32b, and both ends of the positive electrode mixture layer 31b are disposed further inside than both ends of the negative electrode mixture layer 32b. The separator 33 is a porous polyethylene resin with a thickness of 20 to 30 µm. The thickness of the separator 33 is preferably 0.01 mm to 0.50 mm, and more preferably 0.03 mm to 0.20 mm.

In the positive electrode body 31, the positive electrode mixture layer 31b is applied to both surfaces of a positive electrode foil 31a, and the uncoated positive electrode foil exposed part 31c is provided on one side of the positive electrode foil 31a in the width direction. In the negative electrode body 32, the negative electrode mixture layer 32b is applied to both surfaces of a negative electrode foil 32a, and the uncoated negative electrode foil exposed part 32c is provided on the other side of the negative electrode foil 32a in the width direction. The positive electrode foil exposed part 31c and the negative electrode foil exposed part 32c are disposed on opposite sides in the winding axis direction.

The positive electrode foil 31a is an aluminum alloy foil with a thickness of about 20 to 30 µm, and the negative electrode foil 32a is a copper alloy foil with a thickness of about 15 to 20 µm. The positive electrode active material is a lithium-containing transition metal composite oxide such as lithium manganate, and the negative electrode active material is a carbon material such as graphite that can reversibly absorb and release lithium ions.

Fig. 4 is a perspective view of a power generation element assembly. The power generation element assembly is formed by integrating the wound electrode body 3 and the lid 6.

The wound electrode body 3 is assembled as a power generation element assembly by bonding the positive electrode foil connecting part 31d and the negative electrode foil connecting part 32d formed by pre-pressing the positive electrode foil exposed part 31c and the negative electrode foil exposed part 32c in the thickness direction to the positive electrode current collector plate 4A and the negative electrode current collector plate 4B of the lid assembly, respectively, by ultrasonic welding.

In the power generation element assembly, the wound electrode body 3 is attached to be housed in the battery can 1 in a position in which the winding end 33a of the separator 33 is disposed on one flat surface, that is, a flat surface 3a on the front side, indicated in the +Z direction in the drawing, in a direction from the side of the lid 6 to the side of the can bottom 22 of the battery can 1.

The winding end 33a of the separator 33 is disposed at a position biased toward the can bottom relative to the center position of the wound electrode body 3. The insulating adhesive tape 20a is adhered on the flat surface 3a on the front side of the wound electrode body 3 from the side of the lid to the side of the can bottom relative to the winding end 33a of the separator 33. Here, a flat surface 3b on the side (rear side) opposite to the flat surface 3a on the front side of the wound electrode body 3 is covered with the continuous separator 33.

For example, when the battery can 1 of the rectangular secondary battery C1 constituting the battery pack expands, since the center position of the wide side wall part 21a of the side wall part 21, which is the part of the battery can 1 that expands the most, is pressed by fastening, it is preferable that the part be flat with as few irregularities as possible.

Therefore, when the winding end 33a of the separator 33 is disposed at a position biased toward the other curved surface side relative to the center position of the wound electrode body 3, it is possible to prevent irregularities caused by a step at the winding end 33a from being formed at the center position of the wide side surface of the side wall part 21.

Next, the configuration of the insulating protective film 2 will be described in detail with reference to Fig. 5, but Fig. 7 will also be referred to in conjunction with this description.

Fig. 5 shows the insulating protective film 2 that is unfolded, and Fig. 7 shows the front side when the insulating protective film 2 covers the side circumferential surface of the wound electrode body 3. Here, although the insulating protective film 2 formed of an opaque member will be shown below, it is not limited to being opaque but may be transparent.

As shown in Fig. 5, the insulating protective film 2 has a side cover part 51 that covers the side circumferential surface of the wound electrode body 3 and a bottom surface cover part 52 that covers the curved surface of the wound electrode body 3 on the side of the can bottom.

The side cover part 51 is configured to be wound around the side circumferential surface of the wound electrode body 3 with a direction perpendicular to the winding axis direction of the wound electrode body 3 as a center axis direction and cover the side surface of the wound electrode body 3 together with the positive electrode current collector plate 4A and the negative electrode current collector plate 4B from the outside. Alternatively, the side cover part 51 is configured to be folded along the outer shape of the wound electrode body 3 and cover the side surface of the wound electrode body 3 together with the positive electrode current collector plate 4A and the negative electrode current collector plate 4B from the outside.

The bottom surface cover part 52 is configured to be continuous with the side cover part 51, wound around the wound electrode body 3 with a direction of the wound electrode body 3 in the winding axis direction as a center axis direction and cover the curved surface on the side of the can bottom.

As shown in Fig. 5, in the insulating protective film 2, an upper horizontally long rectangular portion forms the side cover part 51, and a lower portion that protrudes continuously from the side cover part 51 forms the bottom surface cover part 52.

The side cover part 51 has a belt shape extending with a certain width, and has a rear surface facing part 51a (first flat surface facing part) that faces the flat surface 3b (the other flat surface) on the rear side of the wound electrode body 3 over the entire surface, and a pair of front surface facing parts 51b and 51c (a pair of second flat surface facing parts) that protrude away from each other continuously from the rear surface facing part 51a in the long side direction and face the flat surface 3a (one flat surface) on the front side of the wound electrode body 3. The rear surface facing part 51a and the front surface facing parts 51b and 51c are areas that face the pair of wide side wall parts 21a of the battery can 1.

In addition, between the rear surface facing part 51a and the front surface facing parts 51b and 51c, a pair of end surface facing parts 51d and 51e that face end surfaces on both sides of the wound electrode body 3 are provided. The pair of end surface facing parts 51d and 51e are areas that face the pair of narrow side wall parts 21b of the battery can 1.

The pair of front surface facing parts 51b and 51c are separated into one side and the other side of the side cover part 51 in the long side direction, and when the side cover part 51 is wound around the side circumferential surface of the wound electrode body 3, the front surface facing parts 51b and 51c overlap and cover the flat surface 3a on the front side of the wound electrode body 3.

That is, on the flat surface 3a on the front side of the wound electrode body 3, a side end 51g on one side in the long side direction and a side end 51f on the other side in the long side direction are disposed so that they overlap each other by a predetermined distance D (refer to Fig. 7) in the winding axis direction of the wound electrode body 3, and as shown in Fig. 7, an end surface overlapping part 51h is formed between the side end 51g and the side end 51f. The length of the predetermined distance D is arbitrary, but a length that secures a penetration region formed by a notch part to be described below is necessary.

Here, at the side end 51g on one side in the long side direction and the side end 51f on the other side in the long side direction, notch parts 51g-1 and 51f-1 having a predetermined shape are formed in the winding axis direction of the wound electrode body 3. In the present embodiment, rectangular notches including the side ends 51g and 51f are formed.

Regarding the positions of the formed notch parts 51g-1 and 51f-1, when viewed in the width direction (short direction) of the side cover part 51, the notch parts 51g-1 and 51f-1 have a positional relationship in which they are formed approximately near the center, preferably at the center, and when the side end 51g and the side end 51f overlap, the respective notch parts 51g-1 and 51f-1 are aligned and overlap. That is, the notch parts 51g-1 and 51f-1 are formed near the center of the end surface overlapping part 51h.

Therefore, regarding the notch parts 51g-1 and 51f-1, when the side end 51g on one side in the long side direction and the side end 51f on the other side in the long side direction overlap, the notch parts 51g-1 and 51f-1 entirely or partially overlap each other to form a penetration region 51k shown in Fig. 7. Therefore, the flat surface 3a on the front side of the wound electrode body 3 is exposed through the notch parts 51g-1 and 51f-1.

Here, as shown in Fig. 7, the pair of front surface facing parts 51b and 51c are adhered and fixed to each other with a rectangular electrically insulating adhesive tape 20b across the end surface overlapping part 51h. In addition, the adhesive tape 20b is adhered and fixed to the flat surface 3a on the front side of the wound electrode body 3 exposed from the penetration region 51k of the notch parts 51g-1 and 51f-1.

The lengths of the front surface facing parts 51b and 51c of the side cover part 51 in the long side direction are different from each other, and in the present embodiment, the front surface facing part 51c is longer than the front surface facing part 51b, and the side ends 51f and 51g are disposed on the flat surface 3a of the wound electrode body 3 at positions biased toward one side in the winding axis direction relative to the center position of the flat surface 3a.

In addition, when the side ends 51f and 51g are disposed at biased positions, the adhesive tape 20b fixing the side ends 51f and 51g can also be disposed at a biased position, the adhesive tape 20b is disposed to overlap the position of the adhesive tape 20a fixing the winding end 33a of the separator 33 near the center position of the wound electrode body 3 in the winding axis direction, and the thickness of the wound electrode body 3 can be prevented from becoming thicker.

The bottom surface cover part 52 is provided to be continuous with the lower end of the rear surface facing part 51a of the side cover part 51 and to protrude in a direction perpendicular to the long side direction of the side cover part 51. When wound around the curved surface on the side of the can bottom of the wound electrode body 3, then the bottom surface cover part 52 has a curved surface facing part 52a that faces the curved surface on the side of the can bottom of the wound electrode body 3, a folded piece part 52b that is continuous with the curved surface facing part 52a and faces the flat surface 3a on the front side of the wound electrode body 3, and a pair of flap parts 52c that are continuous with the curved surface facing part 52a and face the end surfaces of the wound electrode body 3.

The curved surface facing part 52a has a length substantially equal to the length of the wound electrode body 3 in the winding axis direction and has a width at which it curves along the curved surface of the wound electrode body 3 and covers the entire curved surface. The folded piece part 52b is formed to protrude continuously from the curved surface facing part 52a. The pair of flap parts 52c are continuous with both side ends of the bottom surface cover part 52 and protrude away from each other, are bent when inserted into the battery can 1, and interposed between end surfaces on both sides of the wound electrode body 3 in the winding axis direction and the narrow side wall part 21b of the side wall part 21 of the battery can 1.

When the bottom surface cover part 52 is wound around the curved surface on the side of the can bottom of the wound electrode body 3, the folded piece part 52b overlaps the front surface facing parts 51b and 51c, and partially covers the flat surface 3a on the front side of the wound electrode body 3. Then, when inserted into the battery can 1, the folded piece part 52b is interposed between the flat surface 3a on the front side of the wound electrode body 3 and the wide surface part of the side wall part 21 of the battery can 1, and on the flat surface 3a, a tip part 52d of the folded piece part 52b is disposed at a position a predetermined distance away from the winding end 33a of the separator 33 to the side of the can bottom.

A case in which a fixing sheet such as an adhesive tape or a bonding tape is used as a fixing member for fixing the wound electrode body exposed in the penetration region and the insulating film around the penetration region has been exemplified. In this example, using the adhesive tapes 20a, 20b, and 20c, an adhesive is applied to one surface of a substrate. For example, the substrate that is used is a paper, cloth, or film. As the adhesive, known adhesives can be used. For example, a polymer-based adhesive is used. Alternatively, a bonding tape in which a bonding agent is applied to a substrate may be provided.

The insulating protective film 2 is formed of a single sheet or film member made of a synthetic resin, for example, polypropylene (PP). The thickness of the insulating protective film 2 is set to be thicker than the thickness of one separator 33 and thinner than the thickness of three separators, and in the present embodiment, the thickness of one separator 33 is set to 20 to 30 µm, and the thickness of the insulating protective film 2 is set to 50 µm, which is about twice the thickness of the separator.

Here, a case in which PP is used as the material of the insulating protective film 2 has been exemplified, but the material is not limited thereto, and for example, polytetrafluoroethylene (PFA), polyphenylene sulfide (PPS), polyethylene terephthalate (PET), or any synthetic resin of a material that does not react with or alter an electrolytic solution can be used.

Next, a method for attaching an insulating protective film will be described with reference to Fig. 6 and Fig. 7.

First, as shown in Fig. 6, the insulating protective film 2 is disposed on the power generation element assembly with the upper end of the insulating protective film 2 aligned along the lower surface of the lid 6. Then, the rear surface facing part 51a of the side cover part 51 of the insulating protective film 2 is disposed to face the flat surface 3b on the rear side of the wound electrode body 3, and a boundary portion between the side cover part 51 and the bottom surface cover part 52 is positioned so that it is disposed at the lower end of the flat surface 3b on the rear side of the wound electrode body 3.

Next, as indicated by arrows A and B in Fig. 6, both ends of the side cover part 51 of the insulating protective film 2 are wound to cover the positive electrode current collector plate 4A and the negative electrode current collector plate 4B from the outside of the wound electrode body 3. When the side cover part 51 is wound around the side surface of the wound electrode body 3, the insulating protective film 2 is disposed so that the side end 51f of the front surface facing part 51b and the side end 51g of the other front surface facing part 51c overlap each other in the winding axis direction of the wound electrode body 3, and the end surface overlapping part 51h (refer to Fig. 7) is formed between the side end 51g and the side end 51f.

The length of the width D (refer to Fig. 7) of the end surface overlapping part 51h is arbitrary, but a length at which the penetration region 51k formed by the notch parts 51g-1 and 51f-1 is secured is determined. The area of the penetration region 51k is determined by the width D of the end surface overlapping part 51h and the length L of the notch parts 51f-1 and 51g-1 perpendicular thereto.

In this manner, the area of the penetration region 51k is determined to be an area in which the flat surface 3a on the front side of the wound electrode body 3 and the insulating protective film 2 can be adhered and fixed with the adhesive tape 20b. When the area of the penetration region 51k is small, the fixing force of the adhesive tape 20b is insufficient, causing a phenomenon in which the insulating protective film 2 is misaligned. In this manner, since the side end 51f of one front surface facing part 51b and the side end 51g of the other front surface facing part 51c are configured to overlap each other, the flat surface 3a on the front side of the wound electrode body 3 is not exposed, and the dielectric strength can be improved.

Then, after the side cover part 51 is wound, the bottom surface cover part 52 is wound along the curved surface on the side of the can bottom of the wound electrode body 3 as shown in arrow C. The curved surface facing part 52a of the bottom surface cover part 52 has a shape that is curved along the curved part on the side of the can bottom of the wound electrode body 3. Then, the folded piece part 52b is disposed so that it overlaps the outside of one front surface facing part 51b and the other front surface facing part 51c.

As shown in Fig. 7, the insulating protective film 2 is wound around the wound electrode body 3 and then fixed with the electrically insulating adhesive tape 20b and the adhesive tape 20c. The adhesive tape 20c is adhered from the folded piece part 52b of the bottom surface cover part 52 to the front surface facing part 51c.

The adhesive tape 20b is adhered from one side end 51f of the front surface facing part 51b to the other side end 51g of the front surface facing part 51c across the end surface overlapping part 51h. In addition, the adhesive tape 20b is set to a size at which the entire penetration region 51k formed by the notch part 51f-1 of one side end 51f of the front surface facing part 51b and the notch part 51g-1 of the other side end 51g of the front surface facing part 51c is covered, and is disposed at a position at which it covers the penetration region 51k, and adhered and fixed to the surface of the flat surface 3a on the front side of the wound electrode body 3.

In this manner, the adhesive tape 20b adheres and fixes the surface of one side end 51f of the front surface facing part 51b, the surface of the other side end 51g of the front surface facing part 51c, and the surface of the flat surface 3a on the front side of the wound electrode body 3 to each other. Here, as can be seen from Fig. 7, the area of the adhesive tape 20b is set to be sufficiently larger than the area of the penetration region 51k (shaded part) formed in the end surface overlapping part 51h of the insulating protective film 2.

In this manner, since the surface of one side end 51f of the front surface facing part 51b and the other side end 51g of the front surface facing part 51c overlap to form the end surface overlapping part 51h, the flat surface 3a on the front side of the wound electrode body 3 is not exposed, and the dielectric strength can be improved.

In addition, since the penetration region 51k is formed by the notch part 51f-1 formed in one side end 51f of the front surface facing part 51b and the notch part 51g-1 formed in the other side end 51g of the front surface facing part 51c, and the adhesive tape 20b and the surface of the flat surface 3a on the front side of the wound electrode body 3 are adhered and fixed to each other, the insulating protective film 2 and the flat surface 3a on the front side of the wound electrode body 3 can be fixed in a simple operation process, and the productivity can be improved.

In addition, since the penetration region 51k through which the surface of the flat surface 3a on the front side of the wound electrode body 3 is exposed is covered with the electrically insulating adhesive tape 20b, it is possible to improve the dielectric strength of the penetration region 51k formed to simplify the above operation process.

The adhesive tapes 20a, 20b, and 20c are disposed at positions away from each other in a direction along the flat surface 3a of the wound electrode body 3. The positions at which the adhesive tapes 20b and 20c are disposed are preferably positions biased in the cell height direction or the cell width direction from the center position of the flat surface 3a.

Next, a modified example in which the positions of the formed notch parts 51f-1 and 51g-1 are changed will be described with reference to Fig. 8.

In Fig. 8, the notch part 51f-1 of one side end 51f of the front surface facing part 51b and the notch part 51g-1 of the other side end 51g of the front surface facing part 51c are formed close to the tip part 52d of the folded piece part 52b. That is, the notch parts 51f-1 and 51g-1 are formed from the center of the end surface overlapping part 51h to one side. Therefore, the penetration region 51k formed by the notch part 51f-1 and the notch part 51g-1 is formed at a position close to, in this case adjacent to, the tip part 52d of the folded piece part 52b.

Then, the adhesive tape 20b is adhered from one side end 51f of the front surface facing part 51b to the other side end 51g of the front surface facing part 51c across the end surface overlapping part 51h. In addition, the adhesive tape 20b is also adhered to the surface of the tip part 52d of the folded piece part 52b. In addition, the adhesive tape 20b is disposed to cover the entire penetration region 51k formed by the notch part 51f-1 of one side end 51f of the front surface facing part 51b and the notch part 51g-1 of the other side end 51g of the front surface facing part 51c, and is adhered and fixed to the surface of the flat surface 3a on the front side of the wound electrode body 3.

In this manner, the adhesive tape 20b adheres and fixes the surface of one side end 51f of the front surface facing part 51b, the surface of the other side end 51g of the front surface facing part 51c, the surface of the tip part 52d of the folded piece part 52b, and the surface of the flat surface 3a on the front side of the wound electrode body 3 to each other.

In this manner, since the surface of one side end 51f of the front surface facing part 51b and the other side end 51g of the front surface facing part 51c overlap to form the end surface overlapping part 51h, the flat surface 3a on the front side of the wound electrode body 3 is not exposed, and the dielectric strength can be improved.

In addition, since the penetration region 51k is formed by the notch part 51f-1 formed in one side end 51f of the front surface facing part 51b and the notch part 51g-1 formed in the other side end 51g of the front surface facing part 51c, and the adhesive tape 20b and the surface of the flat surface 3a on the front side of the wound electrode body 3 are adhered and fixed to each other, the insulating protective film 2 and the flat surface 3a on the front side of the wound electrode body 3 can be fixed in a simple operation process, and the productivity can be improved.

In addition, since the penetration region 51k through which the surface of the flat surface 3a on the front side of the wound electrode body 3 is exposed is covered with the insulating adhesive tape 20b, it is possible to improve the dielectric strength of the penetration region 51k. In addition, since the adhesive tape 20b is also adhered to the surface of the tip part 52d of the folded piece part 52b, it is possible to prevent the tip part 52d from turning over in this portion.

In the modified example in Fig. 8, a penetration region as shown in a dashed rectangular frame can also be formed in the area above the end surface overlapping part 51h. Accordingly, it is possible to more firmly adhere and fix the insulating protective film 2 and the surface of the flat surface 3a on the front side of the wound electrode body 3.

Next, the shapes of the notch part formed in one side end 51f of the front surface facing part 51b and the notch part formed in the other side end 51g of the front surface facing part 51c will be described. Here, in the following, since the shapes of the notch parts formed in both side ends 51f and 51g are the same, here, the notch part formed in the other side end 51g of the front surface facing part 51c will be described.

Fig. 9 shows examples of notch parts formed in end surface parts on both sides of an insulating film 2, which will be described below.

Fig. 9A shows the notch part 51g-1 of the insulating protective film 2 shown in Fig. 5, and the notch part 51g-1 has a rectangular shape. The depth D1 of the notch part 51g-1 and the range of the width L are arbitrary, but as described above, it is necessary for the penetration region 51k to be determined to have a size at which an area in which the penetration region 51k can be sufficiently adhered and fixed with the adhesive tape 20b can be secured.

Fig. 9B shows a notch part 51g-2 formed of an arc part 53 and straight line parts 54 in combination. The notch part 51g-2 is a substantially "U-shaped" notch formed of substantially parallel straight line parts 54 connected to the ends of the arc part 53.

Here, the depth D1 of the notch part 51g-2 and the range of the width L are arbitrary, but as described above, it is necessary for the penetration region 51k to be determined to have a size at which an area in which the penetration region 51k can be sufficiently adhered and fixed with the adhesive tape 20b can be secured. In addition, since there are no corners (edges) compared to the rectangular notch part, it is possible to reduce wear on the mold that forms the notch and improve insufficient cutting of the notch.

Fig. 9C shows a notch part 51g-3 formed of the arc part 53. The depth D1 of the notch part 51g-3 and the range of the width L are arbitrary, but as described above, it is necessary for the penetration region 51k to be determined to have a size at which an area in which the penetration region 51k can be sufficiently adhered and fixed with the adhesive tape 20b can be secured. In addition, since there are no corners (edges) compared to the rectangular notch part, it is preferable to reduce wear on the mold that forms the notch.

Fig. 9D shows a triangular notch part 51g-4. The depth D1 of the notch part 51g-4 and the range of the width L are arbitrary, but as described above, it is necessary for the penetration region 51k to be determined to have a size at which an area in which the penetration region 51k can be sufficiently adhered and fixed with the adhesive tape 20b can be secured.

Fig. 9E shows a trapezoidal notch part 51g-5. The depth D1 of the notch part 51g-5 and the range of the width L are arbitrary, but as described above, it is necessary for the penetration region 51k to be determined to have a size at which an area in which the penetration region 51k can be sufficiently adhered and fixed with the adhesive tape 20b can be secured.

The notch parts described above are notches including the side ends 51f and 51g, but notch parts shown below are notches (in the form of a through-hole) that do not include the side ends 51f and 51g.

Fig. 9F shows a rectangular through-hole part 51g-6 as a notch part. The length D1 of the base and the length L of the height of the through-hole part 51g-6 are arbitrary, but as described above, it is necessary for the penetration region 51k to be determined to have a size at which an area in which the penetration region 51k can be sufficiently adhered and fixed with the adhesive tape 20b can be secured.

Fig. 9G shows a circular through-hole part 51g-7 as a notch part. The diameter L of the through-hole part 51g-7 is arbitrary, but as described above, it is necessary for the penetration region 51k to be determined to have a size at which an area in which the penetration region 51k can be sufficiently adhered and fixed with the adhesive tape 20b can be secured.

Here, the shape of the through-hole part is not limited thereto, and various shapes such as a triangular shape, a trapezoidal shape, and an elliptical shape can be used.

In addition, the length D1 of the notch part is, for example, equal to or longer than L. When the battery C1 is longer in the width direction (X direction) than in the height direction (Y direction), it is preferable to deal with a case in which the battery C1 is subjected to stress due to the expansion of the wound electrode body 3. Alternatively, L is longer than D1. This is preferable to deal with a case in which an external force is applied when the wound electrode body 3 is inserted into a container and assembled. As described above, the present invention has, for example, the following configuration.

(1) A rectangular secondary battery including a wound electrode body and an electrically insulating film that is wound around the wound electrode body or folded along the outer shape of the wound electrode body to cover the wound electrode body 3, wherein the insulating film has at least a side circumferential surface part that extends in a circumferential direction of a side circumferential surface of the wound electrode body and covers the wound electrode body and a bottom surface part that covers a bottom surface of the wound electrode body 3, on the side circumferential surface of the wound electrode body, an end surface overlapping part in which end surface parts on both sides of the insulating film overlap each other is formed, and the end surface overlapping part has a penetration region that reaches the side circumferential surface of the wound electrode body, and the periphery of the penetration region of the end surface overlapping part and the side circumferential surface of the wound electrode body 3 are fixed through the penetration region with an electrically insulating fixing sheet.
   Accordingly, it is possible to provide a rectangular secondary battery in which the dielectric strength is improved and an insulating protective film and a wound electrode body can be fixed in consideration of productivity.
(2) In the rectangular secondary battery according to (1), the side circumferential surface of the wound electrode body has at least flat surfaces that face each other, and the end surface overlapping part is formed on one of the flat surfaces, and is formed at a position closer to one side of the one of the flat surfaces than to the other of the flat surfaces. This can prevent irregularities due to a step at the winding end from being formed at the center position of the flat surface, which is the part in which the wound electrode body is most likely to expand due to charging and discharging.
(3) In the rectangular secondary battery according to (2), the area of the fixing sheet is set to be sufficiently larger than the area of the penetration region formed in the end surface overlapping part of the insulating film. For example, the fixing sheet has an area that overlaps the side circumferential surface that is equal to or larger than the area of the penetration region. This is preferable because fixation of the insulating film is improved. For example, the fixing sheet has an area that overlaps the side circumferential surface not exceeding 10 times the area of the penetration region. This is preferable because the fixing sheet disposed between the insulating film and the inner wall of the battery can is minimized.
(4) In the rectangular secondary battery according to (3), the penetration region is formed by a notch part formed in the end surface parts on both sides of the insulating film.
   When the side end on one side of the insulating protective film in the long side direction and the side end on the other side in the long side direction overlap, the notch parts can entirely or partially overlap each other to form a penetration region. Therefore, the flat surface on the front side of the wound electrode body is exposed to the portion of the penetration region.
(5) A rectangular secondary battery including a flat wound electrode body in which a positive electrode body and a negative electrode body are wound with a separator interposed therebetween, a bottomed battery can in which the wound electrode body is housed, a lid for sealing an opening that opens facing a can bottom of the battery can, and an insulating film that is interposed between the battery can and the wound electrode body, wherein the insulating film has a side cover part that is wound around the wound electrode body with a direction perpendicular to a winding axis direction of the wound electrode body as a center axis direction and covers a side circumferential surface of the wound electrode body, the side cover part has a pair of flat surface facing parts that each face one flat surface of the wound electrode body, and respective side ends of the pair of flat surface facing parts overlap in the winding axis direction of the wound electrode body to form an end surface overlapping part, and the end surface overlapping part has a penetration region that reaches one of the flat surfaces of the wound electrode body, and the periphery of the end surface overlapping part and one of the flat surfaces of the wound electrode body are fixed through the penetration region with an electrically insulating fixing sheet. Accordingly, it is possible to provide a rectangular secondary battery in which the dielectric strength is improved and an insulating protective film and a wound electrode body can be fixed in consideration of productivity.
(6) In the rectangular secondary battery according to (5), the penetration region is formed by a notch part formed in the side end of each of the pair of flat surface facing parts. When the side end on one side of the insulating protective film in the long side direction and the side end on the other side in the long side direction overlap, the notch parts can entirely or partially overlap each other to form a penetration region. Therefore, the flat surface on the front side of the wound electrode body is exposed to the portion of the penetration region.
(7) In the rectangular secondary battery according to (6), the fixing sheet is fixed across the end surface overlapping part from one side end to the other side end, and further, the fixing sheet is set to a size at which the entire penetration region formed by the notch part of one side end and the notch part of the other side end is covered, and is disposed at a position at which it covers the penetration region and fixed to the surface of one of the flat surfaces of the wound electrode body. Accordingly, it is possible to provide a rectangular secondary battery in which the dielectric strength is improved and an insulating protective film and a wound electrode body can be fixed in consideration of productivity.
(8) In the rectangular secondary battery according to (7), the area of the fixing sheet is set to be sufficiently larger than the area of the penetration region formed in the end surface overlapping part of the insulating film.
(9) In the rectangular secondary battery according to (1) or (5), the penetration region is formed near the center of the end surface overlapping part. For example, the penetration region is formed to include an area of the center section when the width of the wound electrode body in the height direction (Y direction) is divided into three sections. This is preferable in order to respond to an external force in a side circumferential direction.
(10) In the rectangular secondary battery according to (1) or (5), the penetration region is formed from the center of the end surface overlapping part to one end side. For example, the penetration region is formed on the side closer to the external terminal. This is preferable when the side closer to the external terminal is speculated to expand less in the wound electrode body. In addition, specifically, for example, the penetration region is formed to exclude the center of the width of the wound electrode body in the height direction (Y direction). Alternatively, the penetration region is formed to include an area other than the center section when the width of the wound electrode body in the height direction (Y direction) is divided into three sections.
(11) In the rectangular secondary battery according to (4) or (6), the shape of the notch part is any one of a rectangular shape, an arc shape, a triangular shape, a trapezoidal shape, a circular shape, and a substantially U-shape formed of substantially parallel straight lines connected to the ends of an arc.

Here, the present invention is not limited to the above examples, and includes various modified examples. The above examples have been described in detail in order to explain the present invention in an easy-to-understand manner, and the present invention is not necessarily limited to having all the configurations described. In addition, it is possible to replace a part of the configuration of an example with the configuration of another example, and the configuration of another example can be added to the configuration of an example. It is also possible to add, delete and replace other configurations with respect to the configuration of each example.

### Reference Signs List

- C1: Rectangular secondary battery
- 1: Battery can
- 1a: Opening
- 2: Insulating protective film
- 3: Wound electrode body
- 3a: Flat surface on front side
- 3a: Flat surface on rear side
- 4A: Positive electrode current collector plate
- 4B: Negative electrode current collector plate
- 5: Gasket
- 6: Lid
- 6A: Positive electrode side through-hole
- 6B: Negative electrode side through-hole
- 7: Dielectric plate
- 8A: Positive electrode external terminal
- 8B: Negative electrode external terminal
- 9: liquid injection port
- 10: Gas exhaust valve
- 11: Liquid injection plug
- 12A: Positive electrode connecting part
- 12B: Negative electrode connecting part
- 20a: Adhesive tape
- 20b: Adhesive tape
- 20c: Adhesive tape
- 21: Side wall part
- 22: Can bottom
- 31: Positive electrode body
- 32: Negative electrode body
- 33: Separator
- 51: Side cover part
- 51a: Flat surface facing part
- 51b, 51c: Front surface facing part
- 51f, 51g: Side end
- 51f-1, 51g-1: Notch part
- 52: Bottom surface cover part
- 52b: Folded piece part
- 52d: Tip part

## Claims

1. A rectangular secondary battery comprising a wound electrode body and an electrically insulating film that is wound around the wound electrode body or folded along the outer shape of the wound electrode body to cover the wound electrode body,
wherein the insulating film has at least a side circumferential surface part that extends in a circumferential direction of a side circumferential surface of the wound electrode body and covers the wound electrode body and a bottom surface part that covers a bottom surface of the wound electrode body,
on the side circumferential surface of the wound electrode body, an end surface overlapping part in which end surface parts on both side of the insulating film overlap each other is formed, and
the end surface overlapping part has a penetration region that reaches the side circumferential surface of the wound electrode body, and the periphery of the penetration region of the end surface overlapping part and the side circumferential surface of the wound electrode body are fixed through the penetration region with an electrically insulating fixing sheet.

2. The rectangular secondary battery according to claim 1,
wherein the side circumferential surface of the wound electrode body has at least flat surfaces that face each other, and
the end surface overlapping part is formed on one of the flat surfaces, and is formed at a position closer to one side of the one of the flat surfaces than to the other of the flat surfaces.

3. The rectangular secondary battery according to claim 2,
wherein the area of the fixing sheet is set to be sufficiently larger than the area of the penetration region formed in the end surface overlapping part of the insulating film.

4. The rectangular secondary battery according to claim 3,
wherein the penetration region is formed by a notch part formed in the end surface parts on both sides of the insulating film.

5. A rectangular secondary battery, comprising:
a flat wound electrode body in which a positive electrode body and a negative electrode body are wound with a separator interposed therebetween;
a bottomed battery can in which the wound electrode body is housed;
a lid for sealing an opening that opens facing a can bottom of the battery can; and
an insulating film that is interposed between the battery can and the wound electrode body,
wherein the insulating film has a side cover part that is wound around the wound electrode body with a direction perpendicular to a winding axis direction of the wound electrode body as a center axis direction and covers a side circumferential surface of the wound electrode body,
the side cover part has a pair of flat surface facing parts that each face one flat surface of the wound electrode body, and respective side ends of the pair of flat surface facing parts overlap in the winding axis direction of the wound electrode body to form an end surface overlapping part, and
the end surface overlapping part has a penetration region that reaches one of the flat surfaces of the wound electrode body, and the periphery of the end surface overlapping part and one of the flat surfaces of the wound electrode body are fixed through the penetration region with an electrically insulating fixing sheet.

6. The rectangular secondary battery according to claim 5,
wherein the penetration region is formed by a notch part formed in the side end of each of the pair of flat surface facing parts.

7. The rectangular secondary battery according to claim 6,
wherein the fixing sheet is fixed across the end surface overlapping part from one side end to the other side end, and
further, the fixing sheet is set to a size at which the entire penetration region formed by the notch part of one side end and the notch part of the other side end is covered, and is disposed at a position at which it covers the penetration region and fixed to the surface of one of the flat surfaces of the wound electrode body.

8. The rectangular secondary battery according to claim 7,
wherein the area of the fixing sheet is set to be sufficiently larger than the area of the penetration region formed in the end surface overlapping part of the insulating film.

9. The rectangular secondary battery according to claim 1 or 5,
wherein the penetration region is formed near the center of the end surface overlapping part.

10. The rectangular secondary battery according to claim 1 or 5,
wherein the penetration region is formed from the center of the end surface overlapping part to one end side.

11. The rectangular secondary battery according to claim 4 or 6,
wherein the shape of the notch part is any one of a rectangular shape, an arc shape, a triangular shape, a trapezoidal shape, a circular shape, and a substantially U-shape formed of substantially parallel straight lines connected to the ends of an arc.
